# EUROPEAN PATENT APPLICATION

(11) **EP 4 714 929 A1**
(43) Date of publication of application: **25.03.2026**
(21) Application number: 25204163.7
(22) Date of filing: 23.09.2025
(51) Int. Cl.: C04B 41/50, C04B 41/00, C04B 41/86, C04B 33/34, B41M 5/00, C03C 8/16, C04B 111/82, C04B 111/80

(54) **NON-NEWTONIAN WATER-BASED COMPOSITION FOR OBTAINING CERAMIC GLAZES FOR HIGH-RESOLUTION DIGITAL APPLICATION AND PROCESS FOR ITS PRODUCTION**

(30) Priority: 23.09.2024 IT 202400021152
(71) Applicant: Colorobbia Italia S.p.a., 50059 Vinci (FI) (IT)
(72) Inventor: BITOSSI, Marco, 50056 MONTELUPO FIORENTINO (IT); BOCINI, Loriano, 50056 MONTELUPO FIORENTINO (IT); MONARI, Paolo, 41014 CALSTELVETRO DI MODENA (IT); BAGLIO, Antonella, 98070 Galati Mamertino (IT); ARLANDINI, Nicola, 41122 Modena (IT); RENAU, Agustín, Castellón de la Plana (ES); PÉREZ, Javier, Castellón de la Plana (ES)
(74) Representative: Palladino, Saverio Massimo

(57) **Abstract**

A non-Newtonian water-based composition for producing ceramic glazes for high-resolution digital application is described, which allows for texturing and decorating a ceramic substrate in a single deposition step. The invention is particularly useful in the field of production of tiles with an appearance similar to natural materials such as unpolished stone or wood.

## Description

### FIELD OF THE INVENTION

This invention refers to the industry sector of decoration of ceramic products through glaze printing for obtaining a three-dimensional surface texture. The products and methods of the present invention are especially important in the production of tiles for use in building construction; given the relevance of this application, reference will be made to it in the remainder of the text, however the description can also be applied to other types of ceramic products.

### STATE OF THE ART

The introduction of digital inkjet printing technology as a ceramic tile decoration method has enabled an evolution in the type of products available on the market, resulting in a series of management, processing, and product advantages. Previous technologies (roller decoration, screen printing, *etc.*) had in fact drawbacks, for example, of low resolution of the design transferred to the substrate or imperfections of the same, due to the fact that the printing substrate is often not perfectly flat.

To overcome these issues, digital printing technologies have been introduced in the last 2-3 decades, in which the decoration of the ceramic substrate is obtained by ejection of droplets of a suspension containing precursors of the decoration material from a microprocessor-controlled print head. These digital decoration systems are based on high-resolution (greater than 220 dpi) DOD (Drop on Demand) technology, which uses print heads generating droplets of tens of picoliters at a frequency that, depending on the print head manufacturer, ranges between 5 and 30 KHz; the best-known manufacturers of these types of print heads are, among others, Dimatix (Fujifilm), Xaar, Seiko, K&M, Ricoh and Durst.

With these techniques, decoration typically occurs using materials, primarily pigments, having a D₁₀₀ particle size < 1.2 µm (*i.e.,* a particle size distribution such that all particles have a maximum size smaller than this value) and that can be sprayed with 50-micron nozzles up to a maximum grammage of 25-30 g/m².

There are numerous patent documents relating to digital printing glazes suitable for use with DOD technology; see, for example, US Patent Application 2015/291841 A1 relating to the glazing of ceramic tiles that require a relatively small amount of glaze and high resolution to achieve the desired aesthetic effects, in both the pre- and post-decoration phases.

When, due to the aesthetic and technical characteristics of ceramic tiles, it is necessary to apply a greater amount of glaze than that permitted by high-resolution DOD technology, other techniques are required; among these, digital inkjet printing with solenoid valve systems or the technique described in the patent applications EP 1972450 A2 and EP 2085225 A2 are known, wherein larger print nozzles than those of standard DOD printers are provided to allow larger amounts of products with larger particle sizes to go through. The droplet size generated by these systems is of several tens of nanoliters, the print head discharge frequency is in the order of 1 kHz, and the resolution is of about 50 dpi.

Another development in this industry sector has been the transition from organic solvent-based products to water-based products with appropriate additives, aimed at reducing environmental impact and, above all, the emission of odorous substances during the tile firing process. An example of such systems is the patent application WO 2020/065429 A1, which describes additives capable of ensuring low emissions into the environment.

Finally, a recent development, driven primarily by market demand, is to have tiles with a surface not perfectly smooth, but that rather reproduces the appearance of unpolished natural stone or the wood grain of parquet flooring; such a type of ceramic surface, reproducing the appearance and even the three-dimensional structure of natural material surfaces, is defined as textured.

For the production of tiles with textured surfaces, it is also important, if not necessary, to meet the requirements outlined above for flat tiles; that is, in particular, the ability to create precise, high-resolution decorations, and the use of products with the lowest environmental impact possible, which do not release (or release in the smallest possible amounts) odorous substances during the heat treatments used in the manufacturing processes.

Currently known products and methods are unable to meet all these requirements at the same time.

One possibility for obtaining a textured surface starting from a flat surface would be to apply large amounts of glaze, with much higher grammages than those used with high-resolution DOD technology, achieving values exceeding one kilogram per square meter. These grammages can be achieved, for example, with the systems described in the patent applications EP 1972450 A2 and EP 2085225 A2, wherein large suspension droplets are however formed, in the order of tens of nanoliters, and do not allow to obtain high-resolution decorations.

US Patent 9765228 B2 describes digital inks/glazes for these types of inkjet printing systems, which have a liquid medium based on a mixture of water and polar solvents, and a solid portion characterized by the use of anti-settling agents normally used in the formulation of traditional glazes applied with non-digital methods, such as bell, disk, cascade, *etc.* These anti-settling agents are generally clays (montmorillonites, bentonites, *etc.*) and kaolins, although carbon black or colloidal oxides and hydroxides may also be used. All of these materials are solids and do not dissolve in a liquid medium consisting of water and polar solvents. Furthermore, all of these materials primarily interact with the solvent molecules that make up the liquid medium, without directly interacting with the solid particles of the glaze. In the case of clays and kaolins, these materials incorporate the solvent molecules into their lamellar structure. When the glaze is at rest or subjected to a low shear rate (γ < 10 s⁻¹), the incorporation of solvent molecules by clay or kaolin causes the viscosity of the glaze to increase significantly, thus obtaining an anti-settling effect. Conversely, when the glaze is subjected to a high shear force, the incorporated molecules are released, thus reducing the viscosity of the glaze. In the case of colloidal oxides, the anti-settling effect is due to the fact that they create three-dimensional networks in which the solvent molecules remain trapped, causing an increase in viscosity when the glaze is at rest or subjected to low shear forces, and a reduction in viscosity as the shear force increases. Glazes exhibiting this behaviour are commonly referred to as thixotropic glazes or non-Newtonian glazes.

The glazes described in US 9765228 B2 are, however, not easy to manage when wishing to use them in digital inkjet for glazing or decorating ceramic substrates. The viscosity of a thixotropic digital glaze at the time of injection is higher than that required for inkjet printing, the droplet does not form immediately, and numerous pulses are required to initiate injection, which causes an effect known as lag. This effect results in missing glazes in the first moments of printing; moreover, since digital systems generally print patterns that do not cover the entire piece (images, geometric shapes, etc.), the printing process is continuously started and stopped, so that the end result is a defective print with numerous missing glazes on the surface of the piece, thus resulting in a printed piece that does not meet the minimum quality criteria required by the ceramic industry.

Furthermore, all inkjet printing techniques are very demanding in terms of stability of the digital glazes intended to be used, since industrial suspension distribution and emission systems contain numerous small-section ducts and passages, small-diameter orifices, three-dimensional filters, corners, *etc.,* where the glaze can become trapped if it is not sufficiently stable, causing clogging and printing issues.

An additional challenge in obtaining perfectly stable digital texturing glazes is the use of relatively large particle sizes (D₁₀₀ < 50 µm), compared to a D₁₀₀ < 1.2 µm typical of high-resolution DOD digital glazes.

To overcome some of the drawbacks described above, completely stable digital glazes without the use of anti-settling agents (Newtonian glazes) have also been studied, with an evaporation weight loss value of less than 5% and a D₁₀₀ particle size < 50 µm for use in digital glazing systems designed to apply grammages greater than 200 g/m²; an example of this type of glaze is described in US patent application 2015/0353415 A1. However, these systems do not allow for good texturization of the ceramic substrate.

Given these challenges, the systems currently used to obtain high-resolution textured and decorated surfaces involve two-step processes: in the first step, the starting ceramic surface is texturized, either directly while still in the form of a workable plastic dough or, at a later stage, through the selective deposition onto the surface of materials that give rise to texturization, usually glues or grits, according to a design and often in multiple deposition steps; in the second step, the textured surface thus obtained is decorated. Examples of this approach are described in the patent applications CN 102503386 A, CN 115403410 A, and WO 2011/107610 A1.

These methods, however, have the disadvantage of requiring a dedicated processing step, separate from the decoration step, to create the textured surface, resulting in extended production times; furthermore, when glues are used, they generate significant amounts of odorous organic vapours during the heat treatments for firing the glazes.

Therefore, this industry sector still faces the challenge of providing a system for producing textured and decorated ceramic surfaces free from the aforementioned issues; that is, a system allowing for texturization and decoration of a ceramic surface in a single production step, not generating sedimentation issues or clogs in ducts and orifices of the printing machines, and not generating large amounts of odorous substances at the production site.

### SUMMARY OF THE INVENTION

These and other objects are achieved by the present invention, which relates to a non-Newtonian water-based composition for obtaining ceramic glazes for high-resolution digital application, obtained by mixing, by weight:
- between 50 and 55% of a mixture of ceramic raw materials, including frits, clays including bentonites as suspending agents and kaolinites, sodium feldspar, quartz, and optionally ceramic pigments;
- between 18 and 22% of an additive comprising organic compounds in a solvent consisting of a mixture of water and ethylene glycols;
- between 24 and 32% of water;
- optionally, between 1 and 4% di of a carboxymethyl cellulose-based glue.

### BRIEF DESCRIPTION OF THE FIGURES

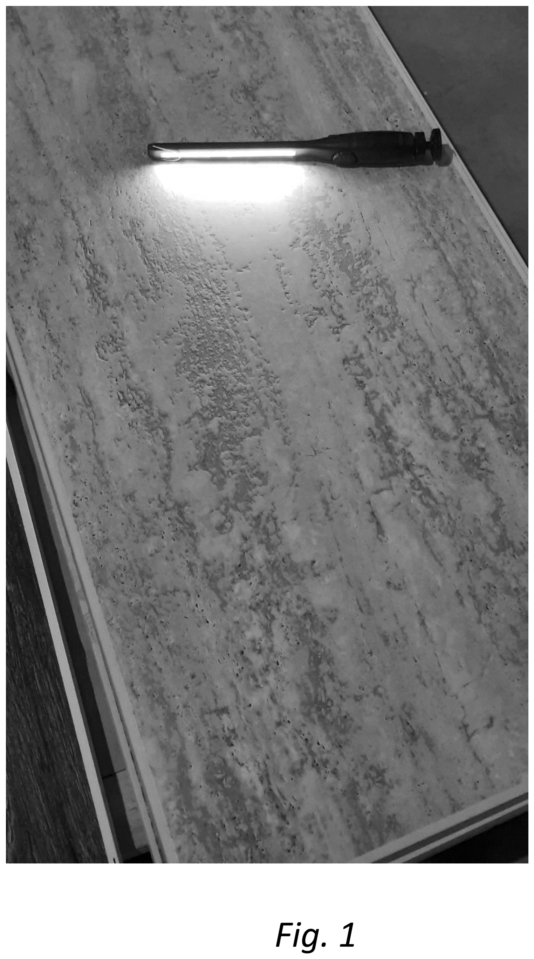

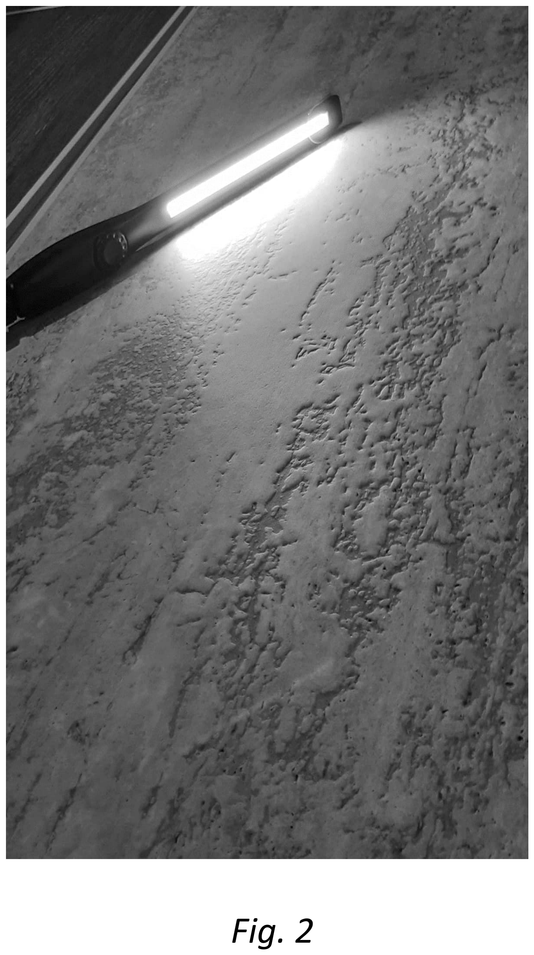

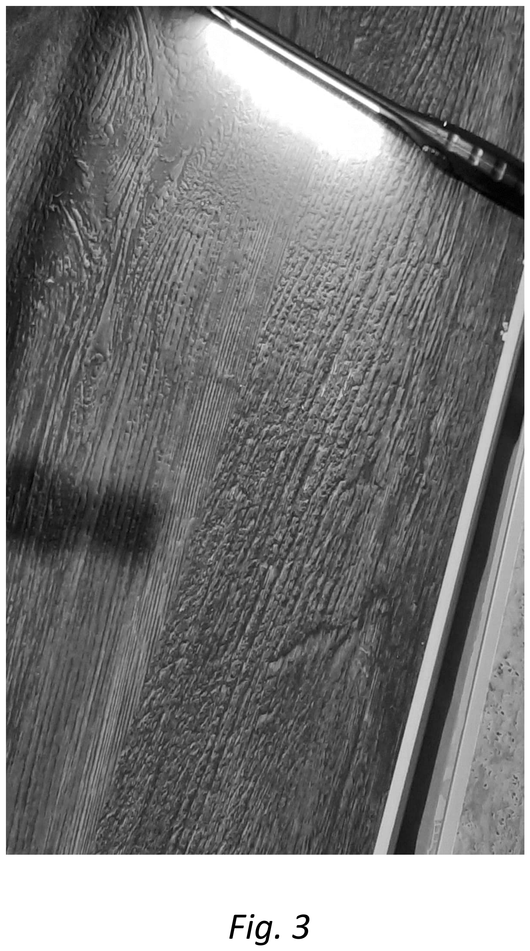

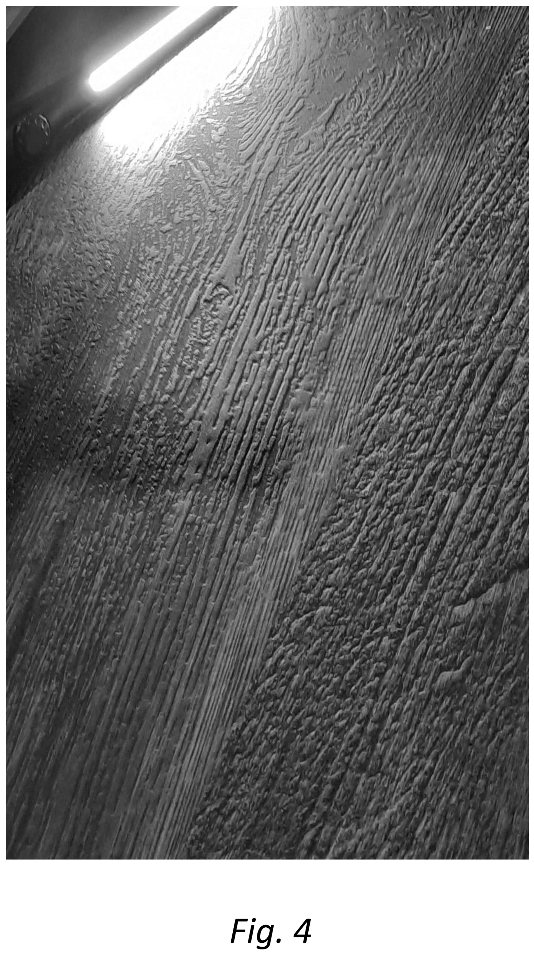

Figures 1 to 4 reproduce photographs of tiles produced with the glazes of the invention.

### DETAILED DESCRIPTION OF THE INVENTION

The composition of the invention has non-Newtonian behaviour; that is, its viscosity varies as a function of the applied shear stress. This allows to obtain a product with relatively low viscosity during the ejection step from orifices or nozzles of the print heads, thus avoiding issues of clogging of such print heads or delays in the ejection of the composition droplets, resulting in printing defects; after deposition, however, the composition has a high viscosity and does not spread across the ceramic surface, being present only in the selective printing areas, thus allowing for texturization of the same surface.

In the following description, all percentages are by weight, unless otherwise specified.

The term "dry matter" refers to the sum of the weights of the ceramic raw materials and the organic, polymeric, preservative, and bentonite components.

The term "textured" and related terms refer to a surface with raised parts and details, having a height of between 0.2 and 0.35 mm above the base surface.

The composition of the invention is obtained by mixing under stirring a mixture of ceramic raw materials and an additive in a water-based liquid solids suspension medium.

The mixture of ceramic raw materials comprises the following necessary components:
- 10-30% of frit;
- 15-25% of clays, including kaolinite and bentonite;
- 20-30% of sodium feldspar;
- 20-40% of quartz.

As is known in the field, the frit is a mixture of powders of silica and minerals that provide the composition with oxides.

The clays useful for the present invention necessarily include kaolinitic and bentonite clays. Kaolinitic clay is present in an amount equal to or greater than 8% and lower than 20%. Bentonite is present in this mixture in an amount such that it is between 0.5 and 1.5% of the dry weight of the overall composition; within this range, the amount of bentonite is higher for compositions with a frit content greater than 15%. Although present in a small percentage, bentonite is a necessary component for the compositions of the present invention because the inventors have observed that it has a suspending effect that prevents the sedimentation of the solid component, thus preventing the deposition of solids in ducts and nozzles of the inkjet deposition apparatus.

In a variant of the method for obtaining the compositions of the invention, a portion of the total amount of bentonite required can be introduced into the final composition in the additive formulation; in this case, the amount of this component should be divided between the ceramic raw materials and the additive such that it falls within the weight percentage range indicated above.

The ceramic raw material mixture may also include the following optional additional components:
- 1-6% of alumina;
- 1-2.5% of zinc oxide;
- 1-4% of mullite;
- 1-6% of calcium carbonate;
- 1-10% of wollastonite.

Other components known in the field may be added to the mixture of ceramic raw materials described above, such as pigments, sands, zirconium silicates, barium carbonate, strontium carbonate, lithium carbonate, dolomite, feldspars other than sodium feldspar, tin oxide, nepheline, bismuth oxide, boric products, colemanite, cerium oxide, cobalt oxide, copper oxide, iron oxide, aluminium phosphate, iron carbonate, manganese oxide, sodium fluoride, chromium oxide, spodumene, talc, magnesium oxide, cristobalite, rutile, anatase, bismuth vanadate, vanadium oxide, ammonium pentavanadate, and mixtures thereof.

The components of the mixture and the percentage of each ceramic raw material and frit are defined based on the desired final finish for the glazed surface of the ceramic tile after its firing (transparent glossy, glossy, glossy opaque, opaque, *etc.*)*.* To achieve different surface finishes (glossy, opaque, matte), the main compositional characteristics to be balanced are firstly the type and percentage of frit used, followed by the raw materials in the formula that allow the balance to be shifted more toward a glossy or matte finish. For example, starting with an average digital glaze composition, to achieve a glossier glaze, a higher percentage of transparent frit rather than opaque and a higher percentage of quartz are used, while the use of opacifiers such as alumina and mullite is avoided; obviously, adopting measures contrary to those indicated above, the composition shifts toward obtaining opaque glazes.

A typical composition of the ceramic raw material mixture for obtaining a glaze for application with digital equipment is as follows:
- 18% of frit;
- 25% of clays, of which 1% bentonite;
- 23% of sodium feldspar;
- 20% of quartz;
- 6% of alumina;
- 2.5% of zinc oxide;
- 2% of calcium carbonate;
- 3.5% of wollastonite.

The liquid additive used to prepare the composition of the invention comprises:
- 65-80% of one or more ethylene glycols;
- 1-5% of sodium and/or ammonium acrylate or polyacrylate with a molecular weight of between 100 and 500 g/mol;
- 0.3-2% of a vinyl resin with a weight average molecular weight of between 300,000 and 1,000,000 g/mol as measured by gel permeation chromatography (GPC);
- 0.1-0.5% of antibacterial preservatives;
- 14-30% of water.

The main component of the additive are the ethylene glycols; these can be selected from monoethylene glycol, diethylene glycol, and polyethylene glycols (the latter also known in chemistry by the abbreviation PEG); glycols or polyglycols useful for the invention are those with a molecular weight of 60 to 400 g/mol.

Sodium and/or ammonium acrylate or polyacrylates serve as fluidifying agents; polyacrylates are selected among those with a molecular weight of 100 to 500 g/mol.

The vinyl resin present in the additive has a suspending function.

Ethylene glycols, acrylates, or polyacrylates, and vinyl resins are widely available commercially in the desired molecular weights.

The additive further comprises a small amount of antibacterials to prevent moulds formation during storage, which would give rise to odorous emissions during the heat treatments to which the glaze is subjected in the ceramic manufacturing processes. A useful antibacterial for the purposes of the invention is a commercial mixture of 5-chloro-2-methyl-4-isothiazolin-3-one and 2-methyl-4-isothiazolin-3-one, known as *Kathon.*

Finally, the additive may optionally include bentonite in such an amount that, when added to the amount already present in the ceramic raw material mixture, the total amount of this compound in the composition is in the range of 0.5-1.5% with respect to the weight of the dry matter.

This additive is characterized by good lubricating power, slow drying, and excellent suspending power, allowing for the preparation of glaze and engobe suspensions that are stable over time.

The inventors have observed that the additive has optimal properties, useful for the purposes of the invention, when formulated to have a density between 1.13 and 1.14 g/mL before its addition to the ceramic raw materials mixture.

Optionally, during the preparation of the composition of the invention, between 1 and 4% of a liquid glue, consisting of an aqueous suspension of carboxymethylcellulose (CMC) at a concentration of 6-7% by weight, may be added to the above-mentioned components.

The liquid glue, optionally added to the base composition, acts as a binder for the composition, keeping it stable and preventing separation throughout all the tile manufacturing steps; this component also provides a gripping effect on the ceramic substrate to be decorated, preventing the composition from slipping on said substrate, and thus allowing for a faithful reproduction of the desired design. The addition of liquid glue also delays the drying time of the composition, facilitating the application of the glaze.

The compositions described above are obtained by grinding the solid components in a liquid phase.

A first option is to grind the ceramic raw material mixture in water, the latter in such an amount as to represent between 29 and 36% of the final composition and, once the desired degree of grinding of the ceramic raw materials is achieved, the desired amount of additive is added, under stirring or still under grinding; achievement of the desired degree of grinding is determined by sampling the mixture at predetermined timepoints and measuring the particle size distribution of the sample, continuing the grinding until the desired size is observed on a sample collected from the grinding mill.

Alternatively, the additive can be immediately mixed with water to form the liquid grinding medium, to which the ceramic raw material mixture is added. In this case, the liquid grinding medium is used in an amount of between 35 and 60% by weight of the overall composition.

Grinding takes place in traditional drum mills.

The compositions of the invention comprise, at the end of the preparation:
- between 50 and 55% by weight of a mixture of ceramic raw materials, including frits, clays including bentonites as suspending agents and kaolinites, sodium feldspar, quartz, and optionally ceramic pigments;
- between 14 and 16% of the liquid additive components, including in this amount organic compounds and ethylene glycols, but excluding water;
- between 29 and 36% of water, added partly as simple milling water and partly as a component of the additive;
- optionally, between 1 and 4% of a carboxymethyl cellulose-based glue.

In the mixture of ceramic raw materials, bentonites are present in such an amount as to represent between 0.5 and 1.5% by weight of the dry matter of the final composition.

The compositions prepared as described above have a series of properties and characteristics that make them optimal for high-resolution digital printing with a texturizing effect.

As mentioned, the compositions primarily have non-Newtonian behaviour, and therefore have relatively low viscosity inside the system, particularly in the print head during the so-called "firing" phase; however, they reach a higher viscosity after deposition, preventing the composition from "spreading" onto the substrate; in particular, during the "firing" phase, where the shear rates are in the order of 10⁵ s⁻¹, without exceeding the limit of 10-20 mPa·s, which would cause nozzle clogging or the unwanted release of larger amounts of glaze than desired.

The compositions of the invention also have the following additional characteristics:
- grinding residue of 2-2.5 g/100 mL: this characteristic ensures compatibility with print heads;
- density of between 1.45 and 1.55 g/mL: these density values ensure good suspension of the composition inside the digital printers and, simultaneously, good texture and definition thereof when applied to the tile; lower density values would generate risks of significant suspension sedimentation and loss of definition during application;
- recirculation viscosity in the range 20 < η < 50 mPa·s at 40 °C and viscosity during the "firing" in the range of 10 < η < 30 mPa·s at 40 °C, as measured with an Anton Paar MCR 92 Rheometer. These viscosity values allow for optimal behaviour both during the stay in the printing apparatus and during ejection from the print head, as well as after deposition on the ceramic substrate, as described above. The composition exhibits a pseudoplastic behaviour in the temperature range from 30 °C to 45 °C, with viscosity decreasing as the shear rate increases.
The following measurement method was used to perform the rheological measurements:
- temperature setting at 25 °C;
- homogenization, followed by a rest period;
- viscosity measurement at 25 °C with a shear rate of 0.25 s⁻¹;
- temperature setting at 40 °C;
- homogenization, followed by a rest period;
- viscosity measurement at 40 °C with a shear rate of 0.1÷1500 s⁻¹;
- hysteresis and interpolation measurements at 10, 100, 500 e 1000 s⁻¹.
- ejection speed during jetting, with a 3 mm distance between the print head and the ceramic support, of between 6 and 10 m/s, as measured with a Drop Watcher zoom camera equipped with a high-speed strobe light (JetXpert from ImageXpert);
- drying time of between 90 and 180 seconds at a temperature of between 65 and 70 °C, compatible with the tile transit speeds in the manufacturing plants;
- an expansion coefficient in the range of 60-80 × 10⁻⁷ °C⁻¹; this expansion coefficient value ensures that the glaze obtained with the compositions of the invention has, during heat treatments, an expansion compatible with that of the ceramic substrate and any other components present thereon, thus avoiding fractures due to differential expansion (dilatometric agreement).

The invention will be further described in the following experimental section.

### INSTRUMENTS, METHODS AND EXPERIMENTAL CONDITIONS

An Anton Paar MCR 92 rheometer was used for rheological measurements on the glazes.

A Malvern 3000E laser granulometer was used to measure the particle size distribution of the glazes.

Conformity for digital application of print heads by Durst Phototechnik S.p.A was assessed using the Durst Rockjet^{™} Drop Watcher validation kit.

### EXAMPLE 1

This example refers to the production of a first composition of the invention.

This composition was produced by mixing and grinding the following components as described above:
- 52% of a mixture of ceramic components having the following composition:
   - 18% of frit;
   - 25% of clay, of which 1% bentonite;
   - 23% of sodium feldspar;
   - 20% of quartz;
   - 6% of alumina;
   - 2.5% of zinc oxide;
   - 2% of calcium carbonate;
   - 3.5% of wollastonite.
- 17% of additive having the following composition:
   - 80% of a mixture of ethylene glycols;
   - 3% of sodium polyacrylate with a molecular weight of between 100 and 500
   g/mol;
   - 2% of a vinyl resin with a weight average molecular weight of between 300,000 and 1,000,000 g/mol;
   - 0.5% of antibacterial preservatives;
   - 14.5% of water.
- 31% of water.

The viscosity of this composition at 40 °C was measured at various shear rates. The test results are shown in the following table:

| Shear rate (s⁻¹) | Viscosity (mPa·s) |
|---|---|
| 10 | 80.4 |
| 100 | 27.1 |
| 500 | 19.8 |
| 1000 | 18.7 |

### EXAMPLE 2

This example refers to the production of a second composition of the invention.

The experiment of Example 1 was repeated, except that the mixture of ceramic components had the following composition:
- 10% of frit;
- 25% of clay, of which 1.5% bentonite;
- 30% of sodium feldspar;
- 25% of quartz;
- 3% of mullite;
- 2% of zinc oxide;
- 5% of calcium carbonate.

The results of the viscosity test as a function of the shear rate are shown in the following table:

| Shear rate (s⁻¹) | Viscosity (mPa·s) |
|---|---|
| 10 | 120.3 |
| 100 | 58.7 |
| 500 | 25.1 |
| 1000 | 24.9 |

When compared to the formulation of Example 1, the ratio between clay and frit, and therefore the plasticity of the glaze, is increased in this composition.

### EXAMPLE 3 (COMPARATIVE)

This example refers to the production of a composition not being part of the invention.

The test of Example 1 was repeated, except that the mixture of ceramic components had the following composition:
- 30% of frit;
- 5% of clay, of which 1.5% bentonite;
- 30% of sodium feldspar;
- 25% of quartz;
- 3% of alumina;
- 3% of mullite;
- 2% of zinc oxide;
- 5% of calcium carbonate.

The results of the viscosity test as a function of the shear rate are shown in the following table:

| Shear rate (s⁻¹) | Viscosity (mPa·s) |
|---|---|
| 10 | 22.8 |
| 100 | 16.0 |
| 500 | 14.7 |
| 1000 | 14.4 |

When compared to the formulation of Example 1, the ratio between clay and frit, and therefore the plasticity of the glaze, is decreased in this composition.

From the values obtained, it is noted that, at low shear rates, the composition of this example has a viscosity below the permitted range, resulting in sedimentation issues and consequent defects in jetting quality.

### EXAMPLE 4

This example refers to the production of a third composition of the invention.

The test in Example 1 was repeated, leaving the composition of the ceramic component unchanged but adding in this case 1% of CMC-based glue (6% CMC concentration in the glue) to improve the lubrication of the digital glaze and to provide it with sufficient adhesive power respect to the ceramic substrate or other previously applied layers.

The addition of 1% glue was compensated for by a corresponding decrease in the percentage of additive.

The results of the viscosity test as a function of the shear rate are shown in the following table:

| Shear rate (s⁻¹) | Viscosity (mPa·s) |
|---|---|
| 10 | 88.3 |
| 100 | 37.4 |
| 500 | 19.7 |
| 1000 | 19.6 |

The rheological values of this glaze fall within the working parameters of the technology, and the addition of 1% liquid glue provides better application properties from a ceramic point of view.

### EXAMPLE 5 (COMPARATIVE)

This example refers to the production of another composition not belonging to the invention.

The test of Example 4 was repeated, but in this case using 5% of CMC-based glue; the addition of the glue was compensated for by reducing the percentage of ceramic components to 50%, the percentage of the additive to 15%, and the percentage of water to 30%.

The results of the viscosity test as a function of the shear rate are shown in the following table:

| Shear rate (s⁻¹) | Viscosity (mPa·s) |
|---|---|
| 10 | 140.0 |
| 100 | 51.5 |
| 500 | 25.8 |
| 1000 | 24.3 |

From the values obtained, it is clear that at low shear rates (10 - 100 mPa·s), the digital glaze has a viscosity above the permitted range, resulting in issues with drop formation (delay in triggering the on-demand jetting).

### EXAMPLE 6

This example refers to the production of a ceramic tile with a textured surface using the composition of Example 2.

A number of tiles, with different textured designs, were produced by press moulding a standard ceramic substrate. After drying, an engobe (industry standard composition) having a density of 1450 - 1500 g/L, with a grammage of about 370 g/m², was sprayed onto each tile. The composition of Example 2 was then applied, the graphics were printed, and lastly a final glaze ("top coat", an industry standard composition) having a density of 1350 - 1400 g/L, with a grammage of about 210 g/m², was applied.

Figures 1-4 show photographs of the resulting tiles.

### COMMENT ON THE RESULTS

Based on the examples given, it is noted that:
- it is necessary to work with clay percentages ≥ 8%, but never greater than 25%. Higher percentages cause an increase in viscosity that exceeds the permitted range;
- the percentage of plastic component should be balanced with the frit percentage content. In Example 3, where the clay:frit ratio is 1:6, viscosity values are below the permitted range, which causes suspension issues;
- the best condition is represented by Example 4, wherein 1% of liquid glue was added to the standard formulation. This is because the glue improves the lubrication of the digital glaze and provides sufficient adhesive power with respect to the ceramic substrate or other previously applied layers;
- the maximum amount of liquid glue that can be added to the digital glaze is 4%. Increasing the glue percentage above this value results in an increase in viscosity (higher than the permitted values, see Example 5), which generates issues both in the recirculation and jetting phases;
- the percentage of liquid glue added to the digital glaze should be adjusted based on the plastic component of the compound: therefore, it will depend on the ratio between the clay and amorphous portion and/or the nature of the clays used.

## Claims

1. Non-Newtonian water-based composition for obtaining ceramic glazes for high-resolution digital application, said composition comprising by weight:
- between 50 and 55% of a mixture of ceramic raw materials, including frits, clays including bentonites as suspending agents and kaolinites, sodium feldspar, quartz, and optionally ceramic pigments;
- between 18 and 22% of an additive comprising organic compounds in a solvent consisting of a mixture of water and ethylene glycols;
- between 24 and 32% of water;
- optionally, between 1 and 4% of a carboxymethyl cellulose-based glue.

2. Composition according to claim 1, wherein the total amount of bentonite present in the mixture of ceramic raw materials and/or the additive is between 0.5 and 1.5% with respect to the weight of the dry matter.

3. Composition according to any one of claims 1 or 2, wherein said mixture of ceramic raw materials comprises as necessary components:
- 10-30% of frit;
- 15-25% of clays, of which an amount equal to or greater than 8% and lower than 20% consists of kaolinitic clays;
- 20-30% of sodium feldspar;
- 20-40% of quartz.

4. Composition according to any one of the preceding claims, wherein said mixture of raw materials further comprises:
- 1-6% of alumina;
- 1-2.5% of zinc oxide;
- 1-4% of mullite;
- 1-6% of calcium carbonate ;
- 1-10% of wollastonite.

5. Composition according to any one of the preceding claims, wherein said mixture of ceramic raw materials further comprises pigments, sands, zirconium silicates, barium carbonate, strontium carbonate, lithium carbonate, dolomite, feldspars other than sodium feldspar, tin oxide, nepheline, bismuth oxide, boric products, colemanite, cerium oxide, cobalt oxide, copper oxide, iron oxide, aluminium phosphate, iron carbonate, manganese oxide, sodium fluoride, chromium oxide, spodumene, talc, magnesium oxide, cristobalite, rutile, anatase, bismuth vanadate, vanadium oxide, ammonium pentavanadate, and mixtures thereof.

6. Composition according to any one of the preceding claims, wherein said liquid additive comprises:
- 65-80% of one or more ethylene glycols;
- 1-5% of sodium and/or ammonium acrylate or polyacrylate with a molecular weight of between 100 and 500 g/mol;
- 0.3-2% of a vinyl resin with a weight average molecular weight of between 300,000 and 1,000,000 g/mol as measured by gel permeation chromatography (GPC);
- 0.1-0.5% of an antibacterial preservative;
- 14-30% of water;
- optionally bentonite.

7. Composition according to any one of the preceding claims, wherein said ethylene glycols are selected from monoethylene glycol, diethylene glycol and polyethylene glycols with molecular weight from 60 to 400 g/mol.

8. Composition according to any one of claims 6 or 7, wherein said sodium polyacrylate has a molecular weight of between 100 and 500 g/mol.

9. Composition according to any one of claims 6 to 8, wherein said antibacterial preservative is a mixture of 5-chloro-2-methyl-4-isothiazolin-3-one and 2-methyl-4-isothiazolin-3-one.

10. Composition according to any one of the preceding claims, further comprising between 1 and 4% of a liquid glue consisting of an aqueous suspension of carboxymethylcellulose at a concentration of 6-7%.

11. Ceramic article with a textured surface obtained by deposition of a composition of any one of the preceding claims on a ceramic substrate, using a digital printing technique, and subsequent heat treatment to transform the composition into a glaze.
